# EUROPEAN PATENT APPLICATION

(11) **EP 4 549 276 A1**
(43) Date of publication of application: **07.05.2025**
(21) Application number: 23207100.1
(22) Date of filing: 31.10.2023
(51) Int. Cl.: B60W 30/18, B62D 12/02, B62D 53/00, B62D 59/00

(54) **ASSISTANCE IN REVERSING A VEHICLE COMBINATION**

(71) Applicant: VOLVO TRUCK CORPORATION, 405 08 Göteborg (SE)
(72) Inventor: Björe, Per, 418 71 Göteborg (SE); Cronquist, Olof, 416 81 Göteborg (SE)
(74) Representative: Valea AB

(57) **Abstract**

A computer system (1100) comprising processing circuitry (1102) configured to handle a motion of a vehicle combination (1) is provided. The vehicle combination comprises a towing vehicle unit (10) and a set of towed vehicle units (11). The processing circuitry (1102) is configured to detect that a reverse gear is a selected or current gear of the towing vehicle unit (10). The processing circuitry (1102) is configured to, in response to detecting that the reverse gear is the selected or current gear of the towing vehicle unit (10), trigger at least one self-propelled towed vehicle unit (13) out of the set of towed vehicle units (11) to apply a negative torque to wheels of the at least one self-propelled towed vehicle unit (13), thereby causing the at least one self-propelled towed vehicle unit (13) to travel in a reverse travel direction (d).

## Description

### TECHNICAL FIELD

The disclosure relates generally to motion management of a vehicle combination. In particular aspects, the disclosure relates to assistance of reversing a vehicle combination. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Reversing a vehicle with trailers or other towed units is a difficult task for both novice and experienced drivers, especially in the case of multiple towed units. This is since it is difficult to determine how the trailers will turn due to their respective articulation angles and force provided by a towing unit.

Hence, there is a strive to improve management of reversing vehicle combinations.

### SUMMARY

According to a first aspect of the disclosure, a computer system comprising processing circuitry configured to handle a motion of a vehicle combination is provided. The vehicle combination comprises a towing vehicle unit and a set of towed vehicle units.

The processing circuitry is configured to detect that a reverse gear is a selected or current gear of the towing vehicle unit.

The processing circuitry is configured to, in response to detecting that the reverse gear is the selected or current gear of the towing vehicle unit, trigger at least one self-propelled towed vehicle unit out of the set of towed vehicle units to apply a negative torque to wheels of the at least one self-propelled towed vehicle unit, thereby causing the at least one self-propelled towed vehicle unit to travel in a reverse travel direction.

The first aspect of the disclosure may seek to improve a condition for reversing the vehicle combination. A technical benefit may include improved reversing condition of the vehicle combination. This is since the at least one self-propelled towed vehicle unit applies the negative torque of the wheels of the at least one self-propelled towed vehicle unit, the vehicle combination is straightened, causing articulation angles of the set of towed vehicle units to less affect a subsequent reversing operation of the towing vehicle unit. This means that the towing vehicle unit and/or a driver therein, can more easily control how to reverse the vehicle combination.

In other words, the vehicle combination can be straightened in a safe and controlled manner, and therefore the vehicle combination can subsequently be more easily reversed by the towing vehicle unit.

Optionally in some examples, including in at least one preferred example, the processing circuitry is further configured to detect that the vehicle combination is at a standstill, or has a longitudinal speed below a threshold, and in response to the vehicle combination being detected to be at a standstill, or detected to be moving at a longitudinal speed below the speed threshold, the processing circuitry is further configured to trigger the at least one self-propelled towed vehicle unit out of the set of towed vehicle units to apply the negative torque.

A technical benefit may include improved reversing condition of the vehicle combination. This is since the at least one self-propelled towed vehicle unit will only provide the negative torque when the vehicle combination is at a standstill, or has a longitudinal speed below a threshold. This means that the assistance caused by the negative torque for straightening the vehicle combination is only performed when it does not interfere with another major motion of the vehicle combination.

Since the vehicle combination can be straightened in a safe and controlled manner, the vehicle combination can subsequently be more easily reversed by the towing vehicle unit.

Optionally in some examples, including in at least one preferred example, the processing circuitry is further configured to obtain a status of a braking arrangement of the vehicle combination. In this example, the processing circuitry is further configured to trigger the at least one self-propelled towed vehicle unit out of the set of towed vehicle units to apply the respective negative torque based on said status of the braking arrangement.

A technical benefit may include improved reversing condition of the vehicle combination. This is since the at least one self-propelled towed vehicle unit will only provide the negative torque with respect to the current braking status. For example, the negative torque may not be provided when the parking brake is engaged. However, negative torque may in some examples be engaged when the service brakes of the towing vehicle unit is engaged.

Hence, the vehicle combination can be straightened in a safe and controlled manner, and therefore the vehicle combination can subsequently be more easily reversed by the towing vehicle unit.

Optionally in some examples, including in at least one preferred example, the processing circuitry is further configured to detect an acceleration request of the towing vehicle unit, and in response to detecting the acceleration request, trigger the at least one self-propelled towed vehicle unit out of the set of towed vehicle units to reduce the applied negative torque.

A technical benefit may include improved reversing condition of the vehicle combination. This is since the at least one self-propelled towed vehicle unit will reduce its negative torque accordingly when the vehicle combination gets a request to accelerate in reverse, and thereby wishes to control the reversing of the set of towed vehicle unit by the towing vehicle unit pushing the set of towed vehicle units.

Optionally in some examples, including in at least one preferred example, the processing circuitry is further configured to trigger the at least one self-propelled towed vehicle unit out of the set of towed vehicle units to apply the negative torque by being configured to trigger the at least one self-propelled towed vehicle unit to apply the negative torque as a predefined function of time.

A technical benefit may include improved reversing condition of the vehicle combination. This is since the at least one self-propelled towed vehicle unit can provide the negative torque according to the function of time which can be optimized for the vehicle combination. For example, the negative torque may be applied by increasing the negative torque over time linearly or non-linearly, up to a set creep-speed for reversing the self-propelled towed vehicle unit. Creep-speed as used in examples herein means a set speed limit, e.g., any suitable slow speed such as limited up to 1, 2, 3, 4, or 5 kilometers per hour. This means that the set of towed vehicle units will be straightened in a slow and controlled manner which simplifies for a driver to further reverse the vehicle combination. Since the vehicle combination can be straightened in a safe and controlled manner, the vehicle combination can subsequently be more easily reversed by the towing vehicle unit.

Optionally in some examples, including in at least one preferred example, the processing circuitry is further configured to trigger the at least one self-propelled towed vehicle unit out of the set of towed vehicle units to apply the negative torque based on a predefined speed limit.

A technical benefit may include improved reversing condition of the vehicle combination. This is since the at least one self-propelled towed vehicle unit will provide the negative torque in a slow and controlled manner based on the predefined speed limit. Accordingly, this means that the set of towed vehicle units will be straightened in a slow and controlled manner which simplifies for a driver to further reverse the vehicle combination. Since the vehicle combination can be straightened in a safe and controlled manner, the vehicle combination can subsequently be more easily reversed by the towing vehicle unit.

Optionally in some examples, including in at least one preferred example, the processing circuitry is further configured to obtain an input from a user interface. The input is indicative to apply a negative torque to the at least one self-propelled towed vehicle unit. In this example, the processing circuitry is further configured to trigger the at least one self-propelled towed vehicle unit out of the set of towed vehicle units to apply the respective negative torque in response to the input being detected.

A technical benefit may include improved reversing condition of the vehicle combination. This is since the at least one self-propelled towed vehicle unit applies the negative torque based on the input from the user interface. This allows a user, e.g., a driver, to toggle the functionality on and off such that it is only used when needed. Since the vehicle combination can be straightened, the vehicle combination can subsequently be more easily reversed by the towing vehicle unit.

Optionally in some examples, including in at least one preferred example, at least one passive towed vehicle unit out of the set of towed vehicle units is attached to the at least one self-propelled towed vehicle unit. In this example, the processing circuitry is further configured to obtain a first angle between the at least one self-propelled towed vehicle unit and the at least one passive towed vehicle unit, and trigger the at least one self-propelled towed vehicle unit to apply the negative torque in response to the first angle being within a predefined interval.

A technical benefit may include improved reversing condition of the vehicle combination. This is since the at least one self-propelled towed vehicle unit will only apply the negative torque when it will cause a straightening of the vehicle combination as a whole, i.e., when the first angle is within a predefined interval meaning that it will be pushed straight in reverse by the at least one self-propelled towed vehicle unit, and will not start to turn due to the first angle. Since the vehicle combination is straightened, the vehicle combination can subsequently be more easily reversed by the towing vehicle unit.

Optionally in some examples, including in at least one preferred example, the processing circuitry is further configured to obtain a plurality of angles comprising respective angles between one or more vehicle units out of the set of towed vehicle units arranged to be pushed by the at least one self-propelled towed vehicle unit when applying the negative torque. In this example, the processing circuitry is further configured to trigger the at least one self-propelled towed vehicle unit to apply the negative torque based on the plurality of angles.

A technical benefit may include improved reversing condition of the vehicle combination. This is since the at least one self-propelled towed vehicle unit will only apply the negative torque when it will cause a straightening of the vehicle combination as a whole, i.e., when the plurality of angles meet respective conditions such as them being sufficiently small to not cause the respective vehicle units to turn while applying the negative torque.

According to a second aspect of the disclosure, a vehicle combination is provided. The vehicle combination comprises a towing vehicle unit and a set of towed vehicle units. The set of towed vehicle units comprises at least one self-propelled towed vehicle unit. The vehicle combination comprises the computer system according to the first aspect.

The second aspect of the disclosure may seek to improve a condition for reversing the vehicle combination. A technical benefit corresponds to the technical benefits of the first aspect.

Optionally in some examples, including in at least one preferred example, the at least one self-propelled towed vehicle unit is arranged at a rear-most position of the vehicle combination.

A technical benefit may include improved reversing condition of the vehicle combination. This is since when the at least one self-propelled towed vehicle unit is arranged at a rear-most position of the vehicle combination, the negative torque of the at least one self-propelled towed vehicle unit will be able to straighten the entire vehicle combination. Since the vehicle combination is straightened, the vehicle combination can subsequently be more easily reversed by the towing vehicle unit.

Optionally in some examples, including in at least one preferred example, the at least one self-propelled towed vehicle unit comprises a self-propelled dolly coupled with a passive towed vehicle unit. In this example, said passive towed vehicle unit is arranged at a rear-most position of the vehicle combination.

A technical benefit may include improved reversing condition of the vehicle combination. This is since it is enabled to straighten the vehicle combination when the at least one self-propelled towed vehicle unit comprises a self-propelled dolly coupled with a passive towed vehicle unit. Since the vehicle combination is straightened, the vehicle combination can subsequently be more easily reversed by the towing vehicle unit.

According to a third aspect of the disclosure, a computer-implemented method for handling a motion of a vehicle combination is provided. The vehicle combination comprises a towing vehicle unit and a set of towed vehicle units.

The method comprises, by processing circuitry of a computer system, detecting that a reverse gear is a selected or current gear of the towing vehicle unit.

The method comprises, in response to detecting that the reverse gear is the selected or current gear of the towing vehicle unit, by the processing circuitry, triggering at least one self-propelled towed vehicle unit out of the set of towed vehicle units to apply a negative torque to wheels of the at least one self-propelled towed vehicle unit, thereby causing the at least one self-propelled towed vehicle unit to travel in a reverse travel direction.

The third aspect of the disclosure may seek to improve a condition for reversing the vehicle combination. A technical benefit may include improved reversing condition of the vehicle combination. This is since the method ensures that at least one self-propelled towed vehicle unit applies the negative torque of the wheels of the at least one self-propelled towed vehicle unit, the vehicle combination is straightened, causing articulation angles of the set of towed vehicle units to less affect a subsequent reversing operation of the towing vehicle unit. This means that the towing vehicle unit and/or a driver therein, can more easily control how to reverse the vehicle combination.

In other words, the vehicle combination can be straightened in a safe and controlled manner, and therefore the vehicle combination can subsequently be more easily reversed by the towing vehicle unit.

Optionally in some examples, including in at least one preferred example, the method comprises, by the processing circuitry, detecting that the vehicle combination is at a standstill, or has a longitudinal speed below a threshold. In this example, triggering the at least one self-propelled towed vehicle unit out of the set of towed vehicle units to apply the negative torque is performed in response detecting that the vehicle combination is at a standstill or is moving at a speed below the speed threshold.

Optionally in some examples, including in at least one preferred example, the method further comprises, by the processing circuitry, obtaining a status of a braking arrangement of the vehicle combination. In this example, triggering the at least one self-propelled towed vehicle unit out of the set of towed vehicle units to apply the respective negative torque is based on said status of the braking arrangement.

Optionally in some examples, including in at least one preferred example, the method further comprises, by the processing circuitry, detecting an acceleration request of the towing vehicle unit. In this example, the method comprises, in response to detecting the acceleration request, by the processing circuitry, triggering the at least one self-propelled towed vehicle unit out of the set of towed vehicle units to reduce the applied negative torque.

Optionally in some examples, including in at least one preferred example, the method further comprises, by the processing circuitry, obtaining an input from a user interface. In this example, the input is indicative to apply a negative torque to the at least one self-propelled towed vehicle unit. In this example, the method comprises triggering the at least one self-propelled towed vehicle unit out of the set of towed vehicle units to apply the respective negative torque in response to the input being detected.

Optionally in some examples, including in at least one preferred example, at least one passive towed vehicle unit out of the set of towed vehicle units is attached to the at least one self-propelled towed vehicle unit. In this example, the method further comprises, by the processing circuitry, obtaining a first angle between the at least one self-propelled towed vehicle unit and the at least one passive towed vehicle unit. In this example, the method further comprises triggering the at least one self-propelled towed vehicle unit to apply the negative torque in response to the first angle being within a predefined interval.

Examples and their benefits of the third aspect have corresponding technical benefits to the second and/or first aspects, and vice versa.

The first, second, and third aspects herein may relate to examples which may be combined with each other in any suitable manner. Benefits of any of the aspects apply to the other respective aspects.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** illustrates a vehicle combination according to an example.
**FIG. 2** illustrates a vehicle combination according to an example.
**FIG. 3** illustrates a flow chart of an exemplary method according to an example.
**FIG. 4** illustrates a flow chart of an exemplary method according to an example.
**FIG. 5** illustrates a vehicle combination according to an example.
**FIG. 6** illustrates a vehicle combination according to an example.
**FIG. 7** illustrates a vehicle combination according to an example.
**FIG. 8** illustrates a vehicle combination according to an example.
**FIG. 9** is a flow chart of an exemplary method according to an example.
**FIG. 10** is another view of **FIG. 1****,** according to an example.
**FIG. 11** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

For vehicle combinations, e.g., trucks with attached trailers, a problem occurs when reversing if the combination is towing units. If there are excessively articulated angles of the towed units, reversing the vehicle combination is very difficult and may risk turning the towed units away from an intended path when reversing with a towing unit, e.g., a tractor. A driver may then need to straighten the combination by driving away from an intended path, and retry to reverse iteratively until succeeding.

Some examples herein solve this problem by ensuring that a vehicle combination straighten itself by having at least one self-propelling towed vehicle unit which provides a negative torque when the vehicle combination has selected, or is in a reverse gear.

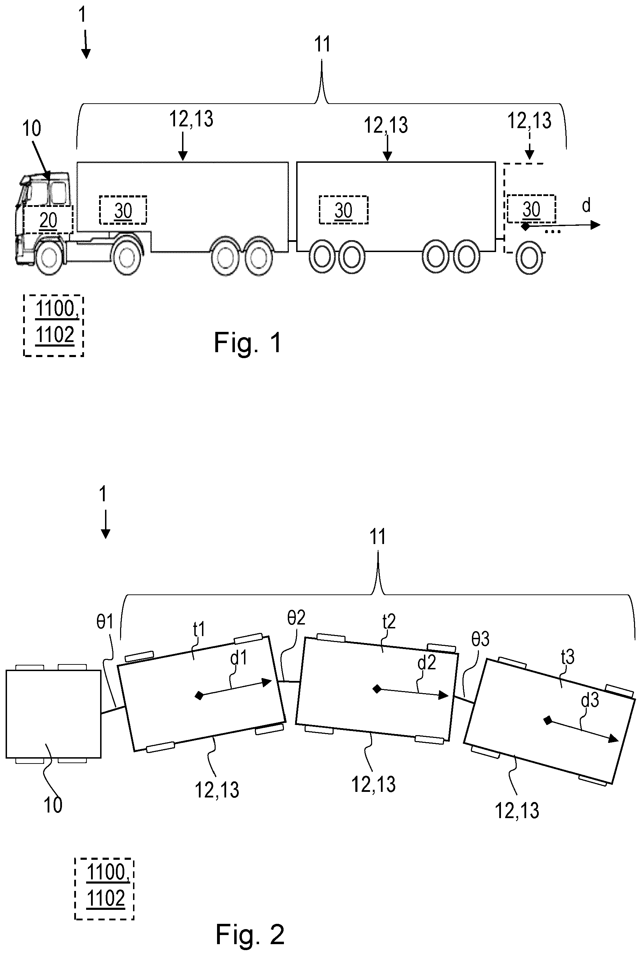

**FIG. 1** is an exemplary **vehicle combination 1** according to an example.

The vehicle combination 1 comprises **a towing vehicle unit 10,** e.g., a tractor or other suitable vehicle unit.

The vehicle combination 1 comprises a set of **towed vehicle units 11.**

The towed vehicle units 11 may comprise one or more trailers and/or one or more dollies.

The set of towed vehicle units 11 comprises **at least one self-propelled vehicle unit 13.**

The at least one self-propelled vehicle unit 13 may comprise one or two self-propelled vehicle units, or more.

The at least one self-propelled vehicle unit 13 may comprise one or more self-propelled dollies and/or one or more self-propelled trailers.

The at least one self-propelled vehicle unit 13 may comprise a respective motor which can supply a respective negative torque to an axle and/or wheels of the respective at least one self-propelled vehicle unit 13.

A negative torque as used herein may be a torque which is supplied to an axle and/or wheels of the respective at least one self-propelled vehicle unit 13 such that the at least one self-propelled vehicle unit 13 is travelling in **reverse travel direction d** as compared to a forward travel direction of the vehicle combination 1. In other words, the negative torque may cause the at least one self-propelled vehicle unit 13 to travel in the reverse travel direction d, in a direction away from the towing vehicle unit 10, which is performed to straighten the vehicle combination 1 to assist in subsequent reversing operations of the vehicle combination 1.

In some examples, the negative torque as used herein may not be sufficient to cause the at least one self-propelled vehicle unit 13 to travel in the reverse travel direction d, at least not immediately. This may be due to rolling resistance and/or road slope, or for any other suitable reasons affecting how much torque is needed to move the at least one self-propelled vehicle unit 13. In other words, applying the negative torque may also, in some circumstances, be considered to only attempt to cause the at least one self-propelled vehicle unit 13 to travel in the reverse travel direction d. However, the negative torque as discussed in examples herein will be assumed to be sufficient to eventually cause the at least one self-propelled vehicle unit 13 to travel in the reverse travel direction d, either by being initially set high, or by gradually increasing over time, e.g., up to a limit such as a limit based on a creep speed limit of the at least one self-propelled vehicle unit 13.

To best straighten the vehicle combination 1, the at least one self-propelled vehicle unit 13 may be arranged at a rear-most portion of the vehicle combination 1. However, examples herein may also straighten the vehicle combination 1 if the at least one self-propelled vehicle unit 13 is arranged in any one or more suitable positions / orders of vehicle units of the vehicle combination 1.

The at least one self-propelled vehicle unit 13 may **at least comprise one passive towed vehicle unit 12.** The at least one passive towed vehicle unit 12 may only be pushed or pulled by the towing vehicle unit 10 and/or the at least one self-propelled vehicle unit 13. The at least one passive towed vehicle unit 12 may not comprise any means for propelling itself, or said mechanism for propelling itself may be broken, faulty, or temporarily shut down.

The at least one passive towed vehicle unit 12 may comprise one or two passive towed vehicle units, or more.

When the at least one self-propelled towed vehicle unit 13 comprises a self-propelled dolly, the self-propelled dolly may be coupled with a respective passive towed vehicle unit 12. In these examples, said passive towed vehicle unit 12 may preferably be arranged at a rear-most position of the vehicle combination 1.

The set of towed vehicle units 11 may comprise any order and number of vehicle units in the at least one passive towed vehicle unit 12 and the at least one self-propelled vehicle unit 13, which vehicle units may be interleaved in any manner or not interleaved. In other words, any vehicle unit of the set of towed vehicle units 11 may be self-propelled, or passive.

The towing vehicle unit 10 may comprise a main **Electronic Control Unit (ECU)** 20 for controlling the vehicle combination 1 and/or for communication with respective one or more **second ECUs 30** comprised in any one or more out of the set of towed vehicle units 11. The one or more second ECUs 30 may communicate over any suitable communication link with the main ECU 20, e.g., for receiving and/or sending indications of motion status, braking status and/or gear status of the vehicle combination 1, in particular associated with the towing vehicle unit 10.

Methods and/or examples herein may be performed by a **computer system 1100** and/or a p**rocessing circuitry 1102** therein.

The computer system 1100 and/or the processing circuitry 1102 may be comprised in any of the vehicle units of the vehicle combination 1, or comprised in a remote location such as in a server or part of a cloud service. For example, the computer system 1100 and/or the processing circuitry 1102 may be part of the main ECU 20 and/or the one or more second ECUs 30.

The computer system 1100 and/or a processing circuitry 1102 may be communicatively connected to any suitable entity of the vehicle combination 1, e.g., to any one or more of the towing vehicle unit 10, the set of towed vehicle units 11, the main ECU 20, the one or more second ECUs 30, and/or to any entity used for measuring and/or communicating signals, messages, status of the vehicle combination 1.

**FIG. 2** illustrates the vehicle combination 1 according to an example. In this example, the towing vehicle unit 10 and the set of towed vehicle units 11 are illustrated with respective articulation angles. The set of towing vehicle units 11 are illustrated as a **first vehicle unit t1,** a **second vehicle unit t2,** and a **third vehicle unit t3** all respectively articulated with respective angles **01, θ2, θ3** to each other and the towing vehicle unit 10.

When the first vehicle unit t1 is self-propelled, its reverse travel direction d is illustrated as a first reverse travel direction **d1**. When the second vehicle unit t2 is self-propelled, its reverse travel direction d is illustrated as a second reverse travel direction **d2.** When the third vehicle unit t3 is self-propelled, its reverse travel direction d is illustrated as a third reverse travel direction **d3.**

As will be discussed in examples herein, the at least one self-propelled vehicle unit 13 may in some examples apply its negative torque based on and/or in response to certain conditions regarding where in the vehicle combination 1 the at least one self-propelled vehicle unit 13 is located, e.g., is there a self-propelled unit in the rear-most part of the vehicle combination or is the rear-most vehicle unit a passive vehicle unit being pushed by the at least one self-propelled vehicle unit 13, and/or is the articulation angles θ1, θ2, θ3 of the vehicle combination sufficiently small if being pushed by the negative torque of the at least one self-propelled vehicle unit 13.

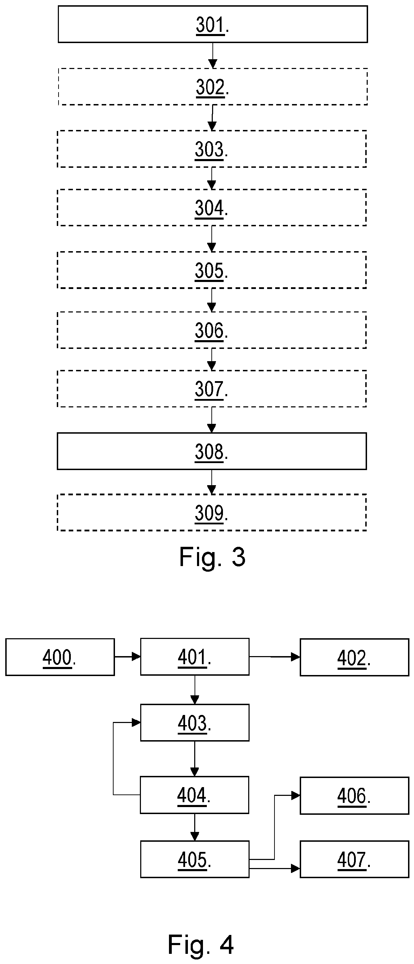

**FIG. 3** illustrates a flow chart of an exemplary method for handling a motion of the vehicle combination 1 comprising the towing vehicle unit 10 and the set of towed vehicle units 11.

The processing circuitry 1102 of the computer system 1100 may be configured to perform the method of below actions 301-309.

The method comprises the following actions, which may be taken in any suitable order. Optional actions are illustrated with a dashed line in FIG. 3.

### Action 301

The method comprises detecting that a reverse gear is a selected or current gear of the towing vehicle unit 10.

Detecting that a reverse gear is a selected or current gear of the towing vehicle unit 10 may be performed by receiving status messages, e.g., from a Controller Area Network (CAN) and/or by obtaining sensor measurements of a gearbox of the towing vehicle unit 10 and/or by a user input for selecting the gear.

Using CAN, the reverse gear may be detected by receiving any suitable reverse gear signals as: "current gear", "selected gear", "reverse gear status". In this example, current gear indicates which gear is actually engaged in the transmission, while selected gear is the gear the transmission aims to be in. So when selected gear changes and current gear will change accordingly but with a small delay.

In this way, it is possible to trigger the at least one self-propelled towed vehicle unit 13 out of the set of towed vehicle units 11 to apply a negative torque to wheels of the at least one self-propelled towed vehicle unit 13, thereby causing the at least one self-propelled towed vehicle unit 13 to travel in a reverse travel direction d, which will be discussed in action 308.

### Action 302

In some examples, the method may comprise detecting that the vehicle combination 1 is at a standstill, or has a longitudinal speed below a threshold.

Detecting that the vehicle combination 1 is at a standstill, or has a longitudinal speed below a threshold may comprise detecting that the towing vehicle unit 10, or any other unit of the vehicle combination 1, is at a standstill, or has a longitudinal speed below a threshold.

### Action 303

In some examples, the method may comprise obtaining a status of a braking arrangement of the vehicle combination 1. The status of the braking arrangement of the vehicle combination 1 may pertain to service brake and/or parking brake usages of the vehicle combination 1.

The status of the braking arrangement of the vehicle combination 1 may be obtained by receiving messages on the CAN network and/or by obtaining sensor measurements of one or more sensors of the braking arrangement and/or by obtaining one or more positions of the brake pedal, e.g., by use of a sensor in the towing vehicle unit 10.

### Action 304

In some examples, the method may comprise detecting an acceleration request of the towing vehicle unit 10. The acceleration request may explicitly be an acceleration request to travel in a reverse travelling direction.

Since the reverse gear is engaged or selected, the acceleration request may be a request to provide a negative torque to the towing vehicle unit 10. This indicates that the towing vehicle unit 10 or a driver therein wants to reverse the vehicle combination 1.

As an example, detecting the acceleration request may be performed by any one or more out of:
- obtaining a demand of an engine propulsion system of the towing vehicle unit 10, e.g., as a percentage of torque,
- obtaining an actual actuation of the engine propulsion system of the towing vehicle unit 10, e.g., as a percentage of torque,
- obtaining one or more other inputs or outputs associated with controlling acceleration or engine torque of the towing vehicle unit 10, e.g., via a remote control interface.

The acceleration request may the towing vehicle unit 10 to supply the negative torque based on a function of the acceleration request.

### Action 305

In some examples, the method may comprise obtaining an input from a user interface. The input is in these examples indicative to apply a negative torque to the at least one self-propelled towed vehicle unit 13. The input may for example be a toggle of a button, position of a stalk, or a setting in a virtual user interface, or a voice command, etc.

### Action 306

In some examples, the at least one passive towed vehicle unit 12 out of the set of towed vehicle units 11 is attached to the at least one self-propelled towed vehicle unit 13. In these examples, the method further comprises obtaining a first angle between the at least one self-propelled towed vehicle unit 13 and the at least one passive towed vehicle unit 12.

The first angle may be used to determine if a negative torque would straighten the vehicle combination 1 or not.

### Action 307

In some examples, the method comprises obtaining a plurality of angles comprising respective angles between one or more vehicle units out of the set of towed vehicle units 11 which are respectively arranged to be pushed by the at least one self-propelled towed vehicle unit 13 when applying the negative torque.

The plurality of angles may not comprise angles of the respective vehicle units out of the towed vehicle units 11 that are directly or indirectly being pulled by the at least one self-propelled towed vehicle unit 13.

In other words the plurality of angles are the articulation angles affected by applying a negative torque by the at least one self-propelling towed vehicle unit 13.

In some examples, a vehicle unit of the at least one self-propelling towed vehicle unit 13 may push up to two passive vehicle units of the at least one passive towed vehicle unit 12, in the reverse travel direction d, if the product of the respective angles out of the plurality of angles are close to 0, or at least below a set threshold.

In some examples, a vehicle unit of the at least one self-propelling towed vehicle unit 13 may push up to two passive vehicle units of the at least one passive towed vehicle unit 12, in the reverse travel direction d, if a function of the respective angles out of the plurality of angles fulfill a predefined evaluation function, e.g., all angles may need to be below a set threshold. The evaluation function may further comprise a weight for each angle based on its position in the vehicle combination 1, i.e., vehicle units closer to the towing vehicle unit 10 may need to have smaller angles than the rearmost vehicle unit of the vehicle combination 1.

### Action 308

The method comprises, in response to detecting, e.g., as in action 301, that the reverse gear is the selected or current gear of the towing vehicle unit 10, triggering at least one self-propelled towed vehicle unit 13 out of the set of towed vehicle units 11 to apply a negative torque to wheels of the at least one self-propelled towed vehicle unit 13, thereby causing the at least one self-propelled towed vehicle unit 13 to travel in a reverse travel direction d.

This means that wheels of the at least one self-propelled towed vehicle unit 13, e.g., of the same axle, may be provided with a uniform negative torque such that the at least one self-propelled towed vehicle unit 13 achieves a reversing motion, e.g., in a straight line without any steering involved.

In some examples, triggering the at least one self-propelled towed vehicle unit 13 out of the set of towed vehicle units 11 to apply the negative torque is performed in response to detecting that the vehicle combination 1 is at a standstill or is moving at a speed below the speed threshold, e.g., as in action 302.

In some examples, triggering the at least one self-propelled towed vehicle unit 13 out of the set of towed vehicle units 11 to apply the respective negative torque is performed based on said status of the braking arrangement, e.g., as obtained in action 303.

For example, if a parking brake is indicated to be engaged, the respective negative torque may not be applied.

However, if the service brake is engaged, and if an obtained brake pressure, e.g., received as part of action 303, is below a threshold, the respective negative torque may be applied with a reduced torque, e.g., as part of action 308 or 309 below.

If an obtained brake pressure, e.g., received as part of action 303, is above a threshold, the respective negative torque should not be applied, i.e., do not trigger the application or remove application of the negative torque if already applied.

In some examples, triggering the at least one self-propelled towed vehicle unit 13 out of the set of towed vehicle units 11 to apply the respective negative torque is performed in response to the input being detected, i.e., the input of action 305..

In some examples, triggering the at least one self-propelled towed vehicle unit 13 to apply the negative torque is performed in response to the first angle being within a predefined interval. This ensures that the at least one self-propelled towed vehicle unit 13 will only provide the negative torque if a resulting pushing of the at least one passive towed vehicle unit 12 results in a straightening of the vehicle combination 1, and the negative torque will not be applied if the first angle is too high, thereby risking turning the at least one passive towed vehicle unit 12.

In some examples, triggering the at least one self-propelled towed vehicle unit 13 to apply the negative torque is performed based on the plurality of angles, e.g., as obtained in action 307. For example, the negative torque may only be applied if a product or sum or other function of the plurality of angles is below a threshold or fulfils a predefined angle condition. This ensures that the at least one self-propelled towed vehicle unit 13 will only provide the negative torque if a resulting pushing of the at least one passive towed vehicle unit 12 results in a straightening of the vehicle combination 1, and the negative torque will not be applied if the combination of the plurality of angles are too high, thereby risking turning the at least one passive towed vehicle unit 12.

In some examples, triggering the at least one self-propelled towed vehicle unit 13 to apply the negative torque is performed by sending a request to the one or more of the second ECUs 30.

In some examples, triggering the at least one self-propelled towed vehicle unit 13 to apply the negative torque is performed independently by each of the one or more second ECUs 30, respectively, i.e., when the method is performed by the one or more second ECUs 30.

In some examples, triggering the at least one self-propelled towed vehicle unit 13 to apply the negative torque is performed by increasing the negative torque up to a certain speed limit, e.g., based on a predefined linear or non-linear function of time.

### Action 309

In some examples, in response to detecting the acceleration request, e.g., as in action 304, the method comprises triggering the at least one self-propelled towed vehicle unit 13 out of the set of towed vehicle units 11 to reduce the applied negative torque.

The reduction may be instantaneous or may be performed according to a predefined reduction function, e.g., by using a linear or nonlinear function, e.g., function of time, to reduce the applied negative torque such that the applied negative torque is reduced in a smooth and controlled manner. The predefined reduction function may additionally or alternatively be based on a position of an acceleration pedal and/or a percentage of a requested engine torque. In other words, the predefined reduction function may be independent of time according to any suitable parameter indicating a movement or motion of the towing vehicle unit 10. This allows for a driver of the vehicle combination 1 to easily be able to maneuver and turn the vehicle combination 1 by reversing and/or steering the towing vehicle unit 10, without the motion of the self-propelled vehicle unit 13 interfering. This also allows the possibility of using a combination of the torque from the towing vehicle 10 and a reduced or remaining torque or momentum from the self-propelled vehicle unit 13 when turning the vehicle combination 1.

Triggering the at least one self-propelled towed vehicle unit 13 out of the set of towed vehicle units 11 to reduce the applied negative torque may be performed subsequent to action 308, while the negative torque is applied.

**FIG. 4** is a flow chart of an exemplary method according to an example. The method and/or actions of FIG. 4 may be combined with the method of FIG. 3 in any suitable manner.

### Action 400

The method comprises detecting that the reverse gear is engaged of the towing vehicle unit 10.

### Action 401

The method comprises determining whether a brake pedal is applied and if parking brake is engaged.

### Action 402

If the brake pedal is applied and if the parking brake is engaged, do nothing.

### Action 403

If the brake pedal is not applied and if the parking brake is disengaged, the method comprises applying torque in reverse on the at least one self-propelled towed vehicle unit 13. The at least one self-propelled towed vehicle unit 13 may preferably be a rear-most vehicle unit in the set of towed vehicle units 11.

### Action 404

If a speed limit is not reached, i.e., creep speed, perform action 403 again.

### Action 405

The method comprises, determine whether an accelerator pedal of the vehicle combination 1 is applied.

### Action 406

The method comprises, when an accelerator pedal of the vehicle combination 1 is applied, back of torque of the at least one self-propelled towed vehicle unit 13 gradually. This may assist in turning of the vehicle combination 1. This is since it allows the driver of the towing vehicle 10 to be able to maneuver and turn the vehicle combination 1 with only the reversing and/or steering of the towing vehicle 10, without any vehicle unit of the at least one self-propelled vehicle unit 13 interfering.

### Action 407

The method comprises, when an accelerator pedal of the vehicle combination 1 is not applied, limit the negative torque to be applied. In other words, if a creep speed is reached, maintain the creep speed of the at least one self-propelled towed vehicle unit 13. In this way, the vehicle combination 1 will be straightened and subsequent reversing operations will be made simpler.

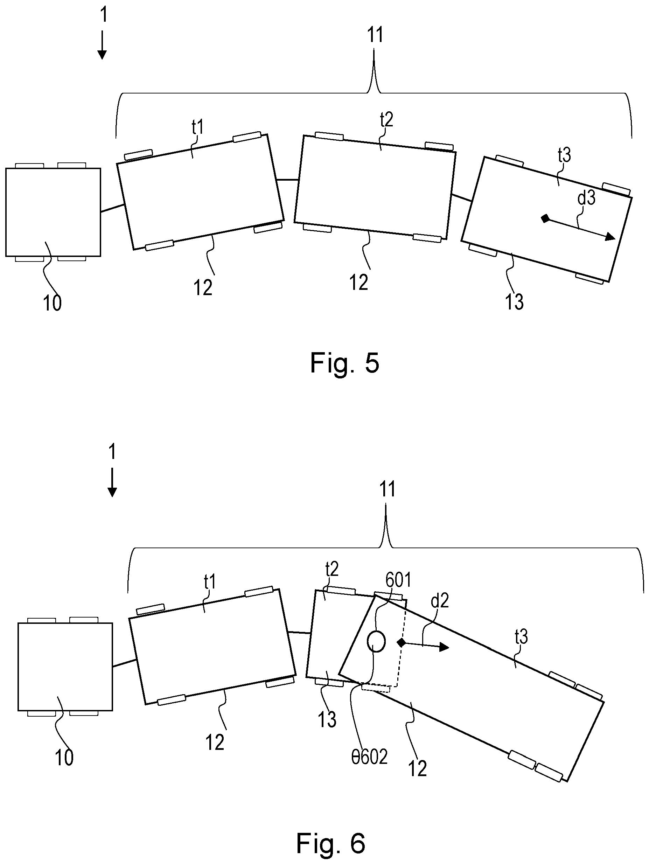

**FIG. 5** illustrates the vehicle combination 1 according to an example. In this example, the third vehicle unit t3 may be a rearmost vehicle unit of the vehicle combination 1, i.e., furthest away from the towing vehicle unit 10. In this example scenario, the third vehicle unit t3 may be the at least one self-propelled towed vehicle unit 13. Between the at least one self-propelled towed vehicle unit 13 and the towing vehicle unit 10, two vehicle units of the at least one passive towed vehicle unit 12, which are straightened when the at least one self-propelled towed vehicle unit 13 applies the negative torque, e.g., as in action 308, causing the at least one self-propelled towed vehicle unit 13 to travel in the travel direction d3, thereby straightening the vehicle combination 1.

**FIG. 6** illustrates the vehicle combination 1 according to an example. In this example, the third vehicle unit t3 may be a rearmost passive trailer of the vehicle combination 1, i.e., furthest away from the towing vehicle unit 10. In this example scenario, the third trailer t3 may be, along with the first vehicle unit 11, part of the at least one passive towed vehicle unit 12. The third vehicle unit t3 may be coupled with the second vehicle unit t2 at a coupling point 601. The second vehicle unit t2 is a self-propelled dolly as part of the at least one self-propelled towed vehicle unit 13. The second vehicle unit t2 applies the negative torque, e.g., as in action 308, causing the at least one self-propelled towed vehicle unit 13 to travel in the travel direction d2, thereby pushing the third vehicle unit t3 and straightening the vehicle combination 1. If an **angle θ602** of the **coupling point 601** is below a threshold, the negative torque is applied, otherwise the negative torque is not applied as it would cause a turning motion of the vehicle units.

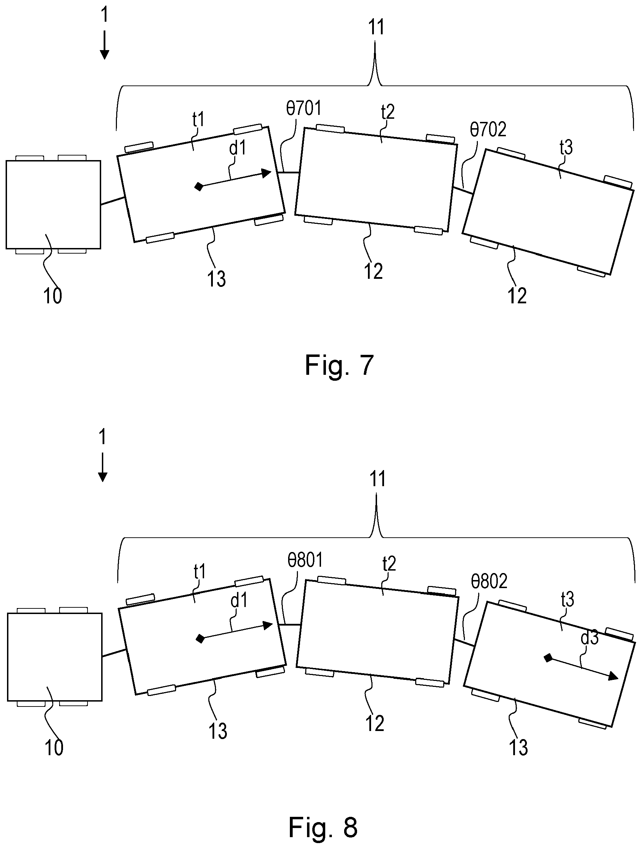

**FIG. 7** illustrates the vehicle combination 1 according to an example. In this example, the third vehicle unit t3 may be a rearmost passive trailer of the vehicle combination 1, i.e., furthest away from the towing vehicle unit 10. In this example scenario, the third trailer t3 may be, along with the second vehicle unit t2, part of the at least one passive towed vehicle unit 12. The third vehicle unit t3 and the second vehicle unit t2 may be pushed by the first vehicle unit t1 as part of the at least one self-propelled towed vehicle unit 13. The first vehicle unit t1 applies the negative torque, e.g., as in action 308, causing the at least one self-propelled towed vehicle unit 13 to travel in the travel direction d1, thereby pushing the second vehicle unit t2, and the third vehicle unit t3, while also straightening the vehicle combination 1. If the product or a function of the plurality of **angles θ701, θ702,** of the set of towed vehicle units 11, e.g., as in action 307, is below a threshold, the negative torque is applied, otherwise the negative torque is not applied as it would cause a turning motion of the vehicle units. The function in this example may be the predefined evaluation function as discussed above, i.e., which evaluates the plurality of angles based on some function, which when met, indicates that the angles are sufficiently small such that they would not cause any of the vehicle units to turn when being pushed.

**FIG. 8** illustrates the vehicle combination 1 according to an example. In this example scenario, it is exemplified that the at least one self-propelled towed vehicle unit 13 may be part of any vehicle unit in the vehicle combination, in this example as part of the first vehicle unit t1 and the third vehicle unit t3. The second vehicle unit t2 may be the at least one passive towed vehicle unit 12. In this example, the at least one self-propelled towed vehicle unit 13 may trigger the negative torque as in action 308. However, the trigger of negative torque relating to the first vehicle unit t1 may be dependent on the articulation angles **θ801, 0802,** e.g., as in action 307 to provide a pushing of the second vehicle unit t2 and/or the third vehicle unit t3 with a reverse travel direction d1, e.g., to straighten the vehicle combination 1. However, the third vehicle unit t3 may provide the negative torque to its respective wheel to straighten the vehicle combination 1 by travelling in the reverse travel direction d3.

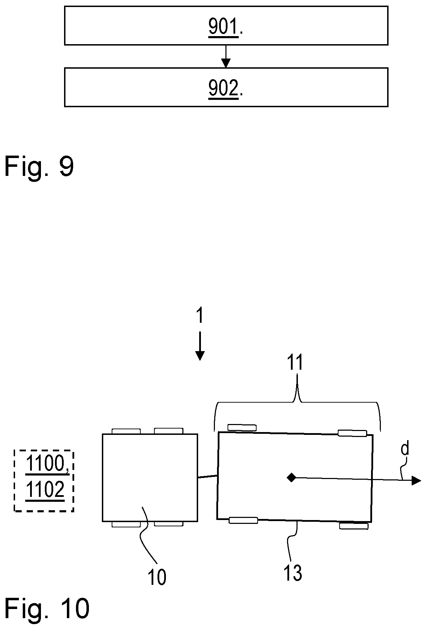

**FIG. 9** is a flow chart of an exemplary computer-implemented method for handling a motion of the vehicle combination 1 comprising the towing vehicle unit 10 and the set of towed vehicle units 11, according to an example. The method may be combined with any one or more action(s) defined above, in any suitable manner.

### Action 901

The method comprises, by the processing circuitry 1102 of the computer system 1100, detecting that a reverse gear is a selected or current gear of the towing vehicle unit 10.

The method comprises, in response to detecting that the reverse gear is the selected or current gear of the towing vehicle unit 10, by the processing circuitry 1102, triggering at least one self-propelled towed vehicle unit 13 out of the set of towed vehicle units 11 to apply a negative torque to wheels of the at least one self-propelled towed vehicle unit 13, thereby causing the at least one self-propelled towed vehicle unit 13 to travel in a reverse travel direction.

**FIG. 10** is another view of **FIG. 1****,** according to an example.

The computer system 1100 comprising the processing circuitry 1102 is configured to handle a motion of the vehicle combination 1. The vehicle combination comprises the towing vehicle unit 10 and the set of towed vehicle units 11.

The processing circuitry 1102 is configured to detect that a reverse gear is a selected or current gear of the towing vehicle unit 10.

The processing circuitry 1102 is configured to, in response to detecting that the reverse gear is the selected or current gear of the towing vehicle unit 10, trigger at least one self-propelled towed vehicle unit 13 out of the set of towed vehicle units 11 to apply a negative torque to wheels of the at least one self-propelled towed vehicle unit 13, thereby causing the at least one self-propelled towed vehicle unit 13 to travel in a reverse travel direction d.

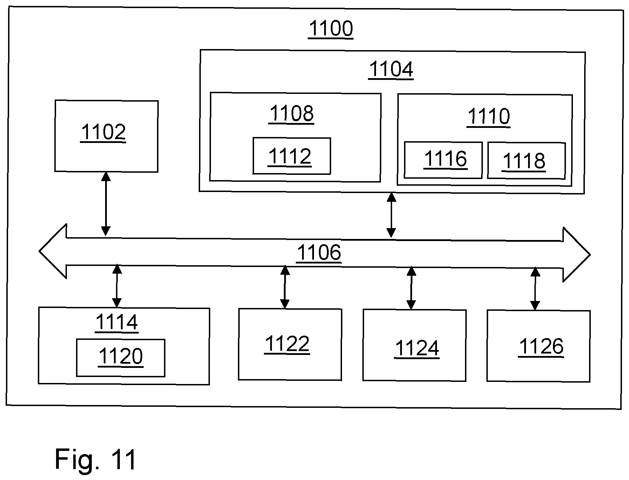

**FIG. 11** is a schematic diagram of the computer system **1100** for implementing examples disclosed herein. The computer system **1100** is adapted to execute instructions from a computer-readable medium to perform these and/or any of the functions or processing described herein. The computer system **1100** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **1100** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **1100** may comprise at least one computing device or electronic device capable of including firmware, hardware, and/or executing software instructions to implement the functionality described herein. The computer system **1100** may include the processing circuitry **1102** (e.g., processing circuitry including one or more processor devices or control units), a memory **1104,** and a system bus **1106.** The computer system **1100** may include at least one computing device having the processing circuitry **1102.** The system bus **1106** provides an interface for system components including, but not limited to, the memory **1104** and the processing circuitry **1102.** The processing circuitry **1102** may include any number of hardware components for conducting data or signal processing or for executing computer code stored in memory **1104.** The processing circuitry **1102** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **1102** may further include computer executable code that controls operation of the programmable device.

The system bus **1106** may be any of several types of bus structures that may further interconnect to a memory bus (with or without a memory controller), a peripheral bus, and/or a local bus using any of a variety of bus architectures. The memory **1104** may be one or more devices for storing data and/or computer code for completing or facilitating methods described herein. The memory **1104** may include database components, object code components, script components, or other types of information structure for supporting the various activities herein. Any distributed or local memory device may be utilized with the systems and methods of this description. The memory **1104** may be communicably connected to the processing circuitry **1102** (e.g., via a circuit or any other wired, wireless, or network connection) and may include computer code for executing one or more processes described herein. The memory **1104** may include non-volatile memory **1108** (e.g., read-only memory (ROM), erasable programmable read-only memory (EPROM), electrically erasable programmable read-only memory (EEPROM), etc.), and volatile memory **1110** (e.g., random-access memory (RAM)), or any other medium which can be used to carry or store desired program code in the form of machine-executable instructions or data structures and which can be accessed by a computer or other machine with processing circuitry **1102.** A basic input/output system (BIOS) **1112** may be stored in the non-volatile memory **1108** and can include the basic routines that help to transfer information between elements within the computer system **1100.**

The computer system **1100** may further include or be coupled to a non-transitory computer-readable storage medium such as the storage device **1114,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **1114** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **1114** and/or in the volatile memory **1110,** which may include an operating system **1116** and/or one or more program modules **1118.** All or a portion of the examples disclosed herein may be implemented as a computer program **1120** stored on a transitory or non-transitory computer-usable or computer-readable storage medium (e.g., single medium or multiple media), such as the storage device **1114,** which includes complex programming instructions (e.g., complex computer-readable program code) to cause the processing circuitry **1102** to carry out actions described herein. Thus, the computer-readable program code of the computer program **1120** can comprise software instructions for implementing the functionality of the examples described herein when executed by the processing circuitry **1102.** In some examples, the storage device **1114** may be a computer program product (e.g., readable storage medium) storing the computer program **1120** thereon, where at least a portion of a computer program **1120** may be loadable (e.g., into a processor) for implementing the functionality of the examples described herein when executed by the processing circuitry **1102.** The processing circuitry **1102** may serve as a controller or control system for the computer system **1100** that is to implement the functionality described herein.

The computer system **1100** may include an input device interface **1122** configured to receive input and selections to be communicated to the computer system **1100** when executing instructions, such as from a keyboard, mouse, touch-sensitive surface, etc. Such input devices may be connected to the processing circuitry **1102** through the input device interface **1122** coupled to the system bus **1106** but can be connected through other interfaces, such as a parallel port, an Institute of Electrical and Electronic Engineers (IEEE) 1394 serial port, a Universal Serial Bus (USB) port, an IR interface, and the like. The computer system **1100** may include an output device interface **1124** configured to forward output, such as to a display, a video display unit (e.g., a liquid crystal display (LCD) or a cathode ray tube (CRT)). The computer system **1100** may include a communications interface **1126** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

A set of examples follows below, which examples may be combined with examples above in any suitable manner.

Example 1. A computer system 1100 comprising processing circuitry 1102 configured to handle a motion of a vehicle combination 1 comprising a towing vehicle unit 10 and a set of towed vehicle units 11, the processing circuitry 1102 is configured to:
- detect that a reverse gear is a selected or current gear of the towing vehicle unit 10,
- in response to detecting that the reverse gear is the selected or current gear of the towing vehicle unit 10, trigger at least one self-propelled towed vehicle unit 13 out of the set of towed vehicle units 11 to apply a negative torque to wheels of the at least one self-propelled towed vehicle unit 13, thereby causing the at least one self-propelled towed vehicle unit 13 to travel in a reverse travel direction d.

Example 2. The computer system 1100 of Example 1, wherein the processing circuitry 1102 is further configured to:
- detect that the vehicle combination 1 is at a standstill, or has a longitudinal speed below a threshold, and
- in response to the vehicle combination 1 being detected to be at a standstill, or detected to be moving at a longitudinal speed below the speed threshold, trigger the at least one self-propelled towed vehicle unit 13 out of the set of towed vehicle units 11 to apply the negative torque.

Example 3. The computer system 1100 of any of Examples 1-2, wherein the processing circuitry 1102 is further configured to:
- obtain a status of a braking arrangement of the vehicle combination 1, and
- trigger the at least one self-propelled towed vehicle unit 13 out of the set of towed vehicle units 11 to apply the respective negative torque based on said status of the braking arrangement.

Example 4. The computer system 1100 of any of Examples 1-3, wherein the processing circuitry 1102 is further configured to:
- detect an acceleration request of the towing vehicle unit 10, and in response to detecting the acceleration request, trigger the at least one self-propelled towed vehicle unit 13 out of the set of towed vehicle units 11 to reduce the applied negative torque.

Example 5. The computer system 1100 of any of Examples 1-4, wherein the processing circuitry 1102 is further configured to trigger the at least one self-propelled towed vehicle unit 13 out of the set of towed vehicle units 11 to apply the negative torque by being configured to trigger the at least one self-propelled towed vehicle unit 13 to apply the negative torque as a predefined function of time.

Example 6. The computer system 1100 of any of Examples 1-5, wherein the processing circuitry 1102 is further configured to trigger the at least one self-propelled towed vehicle unit 13 out of the set of towed vehicle units 11 to apply the negative torque based on a predefined speed limit.

Example 7. The computer system 1100 of any of Examples 1-6, wherein the processing circuitry 1102 is further configured to:
- obtain an input from a user interface, the input being indicative to apply a negative torque to the at least one self-propelled towed vehicle unit 13, and
- trigger the at least one self-propelled towed vehicle unit 13 out of the set of towed vehicle units 11 to apply the respective negative torque in response to the input being detected.

Example 8. The computer system 1100 of any of Examples 1-7, wherein at least one passive towed vehicle unit 12 out of the set of towed vehicle units 11 is attached to the at least one self-propelled towed vehicle unit 13, and wherein the processing circuitry 1102 is further configured to:
- obtain a first angle between the at least one self-propelled towed vehicle unit 13 and the at least one passive towed vehicle unit 12, and
- trigger the at least one self-propelled towed vehicle unit 13 to apply the negative torque in response to the first angle being within a predefined interval.

Example 9. The computer system 1100 of any of Examples 1-8, wherein the processing circuitry 1102 is further configured to:
- obtain a plurality of angles comprising respective angles between one or more vehicle units out of the set of towed vehicle units 11 arranged to be pushed by the at least one self-propelled towed vehicle unit 13 when applying the negative torque, and
- trigger the at least one self-propelled towed vehicle unit 13 to apply the negative torque based on the plurality of angles.

Example 10. A vehicle combination 1 comprising a towing vehicle unit 10 and a set of towed vehicle units 11, wherein the set of towed vehicle units 11 comprises at least one self-propelled towed vehicle unit 13, and wherein the vehicle combination 1 comprises the computer system 1100 of any of Examples 1-9.

Example 11. A vehicle combination 1 according to Example 10, wherein the at least one self-propelled towed vehicle unit 13 is arranged at a rear-most position of the vehicle combination 1.

Example 12. A vehicle combination 1 according to Example 10 or 11, wherein the at least one self-propelled towed vehicle unit 13 comprises a self-propelled dolly coupled with a passive towed vehicle unit 12, wherein said passive towed vehicle unit 12 is arranged at a rear-most position of the vehicle combination 1.

Example 13. A computer-implemented method for handling a motion of a vehicle combination 1 comprising a towing vehicle unit 10 and a set of towed vehicle units 11, the method comprising:
- by processing circuitry 1102 of a computer system 1100, detecting 301, 901 that a reverse gear is a selected or current gear of the towing vehicle unit 10,
- in response to detecting 301, 901 that the reverse gear is the selected or current gear of the towing vehicle unit 10, by the processing circuitry 1102, triggering 308, 902 at least one self-propelled towed vehicle unit 13 out of the set of towed vehicle units 11 to apply a negative torque to wheels of the at least one self-propelled towed vehicle unit 13, thereby causing the at least one self-propelled towed vehicle unit 13 to travel in a reverse travel direction d.

Example 14. The method of Example 13 further comprising:
- by the processing circuitry 1102 detecting 302 that the vehicle combination 1 is at a standstill, or has a longitudinal speed below a threshold, and

wherein triggering 308 the at least one self-propelled towed vehicle unit 13 out of the set of towed vehicle units 11 to apply the negative torque is performed in response detecting that the vehicle combination 1 is at a standstill or is moving at a speed below the speed threshold.

Example 15. The method of any of Examples 13-14, wherein the method further comprises:
- by the processing circuitry 1102 obtaining 303 a status of a braking arrangement of the vehicle combination 1, and
- wherein triggering 308 the at least one self-propelled towed vehicle unit 13 out of the set of towed vehicle units 11 to apply the respective negative torque based on said status of the braking arrangement.

Example 16. The method of any of Examples 13-15, wherein the method further comprises:
- by the processing circuitry 1102 detecting 304 an acceleration request of the towing vehicle unit 10, and
- in response to the detecting the acceleration request, by the processing circuitry 1102, triggering 309 the at least one self-propelled towed vehicle unit 13 out of the set of towed vehicle units 11 to reduce the applied negative torque.

Example 17. The method of any of Examples 13-16, wherein the method further comprises:
- by the processing circuitry 1102 obtaining 305 that an input from a user interface, the input being indicative to apply a negative torque to the at least one self-propelled towed vehicle unit 13, and
- wherein triggering 308 the at least one self-propelled towed vehicle unit 13 out of the set of towed vehicle units 11 to apply the respective negative torque is performed in response to the input being detected.

Example 18. The method of any of Examples 13-17, wherein at least one passive towed vehicle unit 12 out of the set of towed vehicle units 11 is attached to the at least one self-propelled towed vehicle unit 13, and wherein the method further comprises:
- by the processing circuitry 1102, obtaining 306 a first angle between the at least one self-propelled towed vehicle unit 13 and the at least one passive towed vehicle unit 12, and
- wherein triggering 308 the at least one self-propelled towed vehicle unit 13 to apply the negative torque is performed in response to the first angle being within a predefined interval.

Example 19. A computer program product comprising program code for performing, when executed by the processing circuitry 1102, the method of any of Examples 13-18.

Example 20. A non-transitory computer-readable storage medium comprising instructions, which when executed by the processing circuitry 1102, cause the processing circuitry 1102 to perform the method of any of Examples 13-18.

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (1100) comprising processing circuitry (1102) configured to handle a motion of a vehicle combination (1) comprising a towing vehicle unit (10) and a set of towed vehicle units (11), the processing circuitry (1102) is configured to:
- detect that a reverse gear is a selected or current gear of the towing vehicle unit (10),
- in response to detecting that the reverse gear is the selected or current gear of the towing vehicle unit (10), trigger at least one self-propelled towed vehicle unit (13) out of the set of towed vehicle units (11) to apply a negative torque to wheels of the at least one self-propelled towed vehicle unit (13), thereby causing the at least one self-propelled towed vehicle unit (13) to travel in a reverse travel direction (d).

2. The computer system (1100) of claim 1, wherein the processing circuitry (1102) is further configured to:
- detect that the vehicle combination (1) is at a standstill, or has a longitudinal speed below a threshold, and
- in response to the vehicle combination (1) being detected to be at a standstill, or detected to be moving at a longitudinal speed below the speed threshold, trigger the at least one self-propelled towed vehicle unit (13) out of the set of towed vehicle units (11) to apply the negative torque.

3. The computer system (1100) of any of claims 1-2, wherein the processing circuitry (1102) is further configured to:
- obtain a status of a braking arrangement of the vehicle combination (1), and
- trigger the at least one self-propelled towed vehicle unit (13) out of the set of towed vehicle units (11) to apply the respective negative torque based on said status of the braking arrangement.

4. The computer system (1100) of any of claims 1-3, wherein the processing circuitry (1102) is further configured to:
- detect an acceleration request of the towing vehicle unit (10), and in response to detecting the acceleration request, trigger the at least one self-propelled towed vehicle unit (13) out of the set of towed vehicle units (11) to reduce the applied negative torque.

5. The computer system (1100) of any of claims 1-4, wherein the processing circuitry (1102) is further configured to trigger the at least one self-propelled towed vehicle unit (13) out of the set of towed vehicle units (11) to apply the negative torque by being configured to trigger the at least one self-propelled towed vehicle unit (13) to apply the negative torque as a predefined function of time.

6. The computer system (1100) of any of claims 1-5, wherein the processing circuitry (1102) is further configured to trigger the at least one self-propelled towed vehicle unit (13) out of the set of towed vehicle units (11) to apply the negative torque based on a predefined speed limit.

7. The computer system (1100) of any of claims 1-6, wherein the processing circuitry (1102) is further configured to:
- obtain an input from a user interface, the input being indicative to apply a negative torque to the at least one self-propelled towed vehicle unit (13), and
- trigger the at least one self-propelled towed vehicle unit (13) out of the set of towed vehicle units (11) to apply the respective negative torque in response to the input being detected.

8. The computer system (1100) of any of claims 1-7, wherein at least one passive towed vehicle unit (12) out of the set of towed vehicle units (11) is attached to the at least one self-propelled towed vehicle unit (13), and wherein the processing circuitry (1102) is further configured to:
- obtain a first angle between the at least one self-propelled towed vehicle unit (13) and the at least one passive towed vehicle unit (12), and
- trigger the at least one self-propelled towed vehicle unit (13) to apply the negative torque in response to the first angle being within a predefined interval.

9. The computer system (1100) of any of claims 1-8, wherein the processing circuitry (1102) is further configured to:
- obtain a plurality of angles comprising respective angles between one or more vehicle units out of the set of towed vehicle units (11) arranged to be pushed by the at least one self-propelled towed vehicle unit (13) when applying the negative torque, and
- trigger the at least one self-propelled towed vehicle unit (13) to apply the negative torque based on the plurality of angles.

10. A vehicle combination (1) comprising a towing vehicle unit (10) and a set of towed vehicle units (11), wherein the set of towed vehicle units (11) comprises at least one self-propelled towed vehicle unit (13), and wherein the vehicle combination (1) comprises the computer system (1100) of any of claims 1-9.

11. A vehicle combination (1) according to claim 10, wherein the at least one self-propelled towed vehicle unit (13) is arranged at a rear-most position of the vehicle combination (1).

12. A vehicle combination (1) according to claim 10 or 11, wherein the at least one self-propelled towed vehicle unit (13) comprises a self-propelled dolly coupled with a passive towed vehicle unit (12), wherein said passive towed vehicle unit (12) is arranged at a rear-most position of the vehicle combination (1).

13. A computer-implemented method for handling a motion of a vehicle combination (1) comprising a towing vehicle unit (10) and a set of towed vehicle units (11), the method comprising:
- by processing circuitry (1102) of a computer system (1100), detecting (301, 901) that a reverse gear is a selected or current gear of the towing vehicle unit (10),
- in response to detecting (301, 901) that the reverse gear is the selected or current gear of the towing vehicle unit (10), by the processing circuitry (1102), triggering (308, 902) at least one self-propelled towed vehicle unit (13) out of the set of towed vehicle units (11) to apply a negative torque to wheels of the at least one self-propelled towed vehicle unit (13), thereby causing the at least one self-propelled towed vehicle unit (13) to travel in a reverse travel direction (d).

14. A computer program product comprising program code for performing, when executed by the processing circuitry (1102), the method of claim 13.

15. A non-transitory computer-readable storage medium comprising instructions, which when executed by the processing circuitry (1102), cause the processing circuitry (1102) to perform the method of claim 13.
